# FASCICULE DE BREVET EUROPEEN

(11) **EP 3 664 280 B1**
(45) Date de publication et mention de la délivrance du brevet: **15.09.2021**
(21) Numéro de dépôt: 18210841.5
(22) Date de dépôt: 06.12.2018
(51) Int. Cl.: H02P 7/00

(54) **MOTEUR ÉLECTRIQUE À ROTATION CONTINUE AYANT UN ROTOR À AIMANTS PERMANENTS**
KONTINUIERLICH DREHENDER ELEKTROMOTOR MIT EINEM ROTOR MIT DAUERMAGNETEN
ELECTRIC MOTOR WITH CONTINUOUS ROTATION HAVING A ROTOR WITH PERMANENT MAGNETS

(43) Date de publication de la demande: 10.06.2020
(73) Titulaire: The Swatch Group Research and Development Ltd, 2074 Marin (CH)
(72) Inventeur: BORN, Jean-Jacques, 1110 Morges (CH); NAGY, Laurent, 3097 Liebefeld (CH); GERMIQUET, Christophe, 2515 Prêles (CH)
(74) Mandataire: ICB SA

(56) Documents cités:
- EP-A2- 0 887 913
- WO-A1-02/46847
- US-A- 4 492 910

## Description

### Domaine technique

La présente invention concerne le domaine des moteurs électriques à rotation continue ayant un rotor muni d'aimants permanents et un stator formé de bobines. Le bobines sont de préférence sans noyau magnétique, les aimants et les bobines étant agencés de manière que les flux magnétiques des aimants sont directement couplés aux bobines.

En particulier, l'invention concerne des moteurs électriques de petites dimensions qui sont destinés à des applications horlogères. Ils sont notamment incorporés dans des mouvements de montre du type électromécanique avec un affichage analogique.

### Arrière-plan technologique

Dans le domaine horloger, les moteurs électriques utilisés dans les montres électromécaniques sont généralement des moteurs pas-à-pas. Ces moteurs ont un stator magnétique qui définissent des positions de repos pour le rotor muni d'un aimant permanent. Lors d'impulsions motrices, le flux généré par une ou plusieurs bobine(s), enroulée(s) autour d'un ou de noyau(x) magnétique(s) respectifs du stator, permet d'entraîner par pas le rotor. La tension d'alimentation pour engendrer ces impulsions motrices est généralement comprise entre 1.2 et 1.5 Volt. Une analyse de la tension induite dans l'une ou l'autre bobine après chaque impulsion motrice permet de déterminer si le pas a été correctement effectué. Si tel n'est pas le cas, une impulsion de rattrapage est prévue. Dans un moteur pas-à-pas, comme le rotor est à l'arrêt dans une position angulaire déterminée, il n'y a pas de problème particulier quant à une synchronisation entre la position angulaire du rotor et les déclenchements successifs des impulsions motrices.

Les moteurs pas-à-pas horlogers ont fait leurs preuves, ils sont fiables et peuvent avoir une consommation réduite notamment grâce à un hachage du signal formant chaque impulsion motrice, technique nommée 'PWM - Pulse Width Modulation' en anglais. Toutefois les moteurs pas-à-pas ont tendance à faire du bruit lors du passage des pas, ce qui peut être gênant surtout la nuit pour un utilisateur. De plus, cette avance pas-à-pas des aiguilles, en particulier de l'aiguille des secondes, est un signe distinctif des montres électromécaniques, signe visible qui n'est pas toujours avantageux dans l'esprit du consommateur. Pour remédier à ces problèmes, il est possible d'incorporer dans un mouvement de montre un moteur électrique à rotation continue de petites dimensions du type à rotor muni d'aimants permanents.

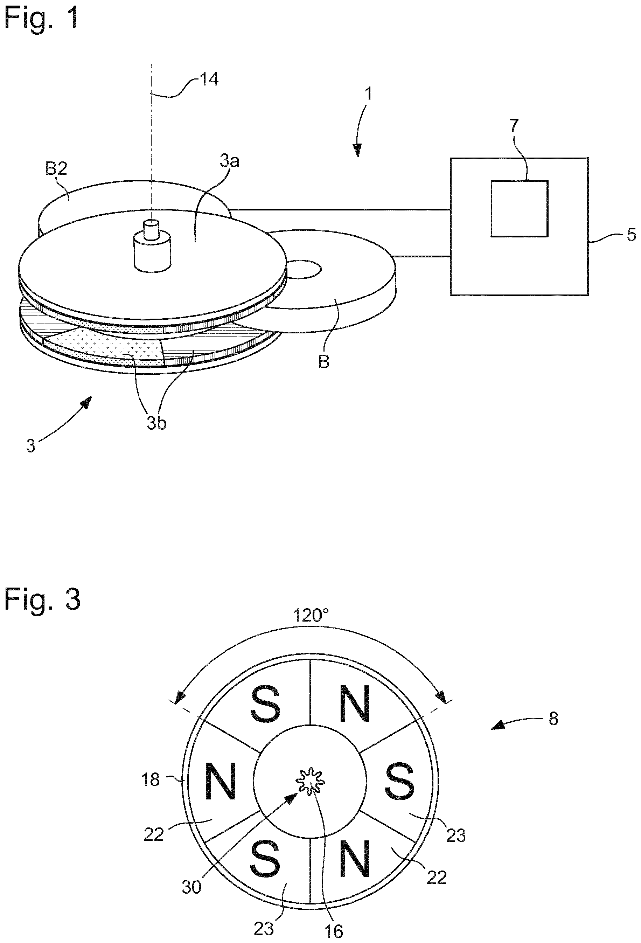

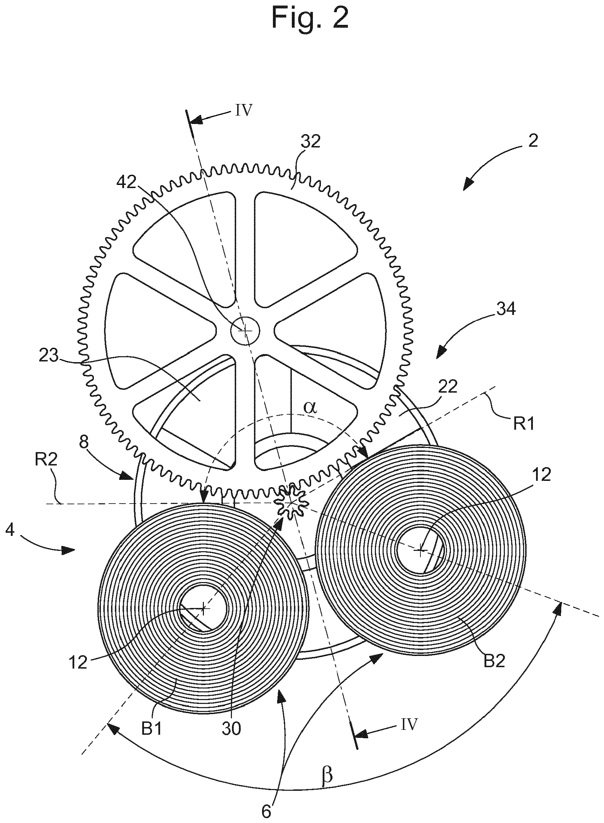

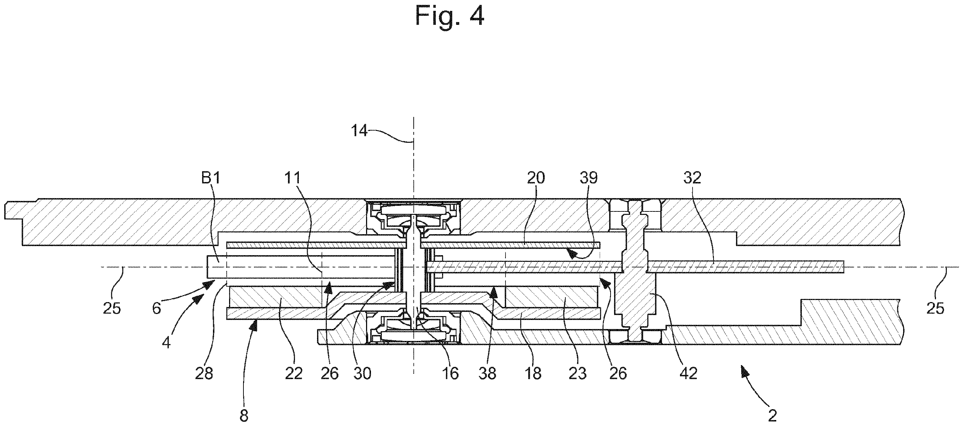

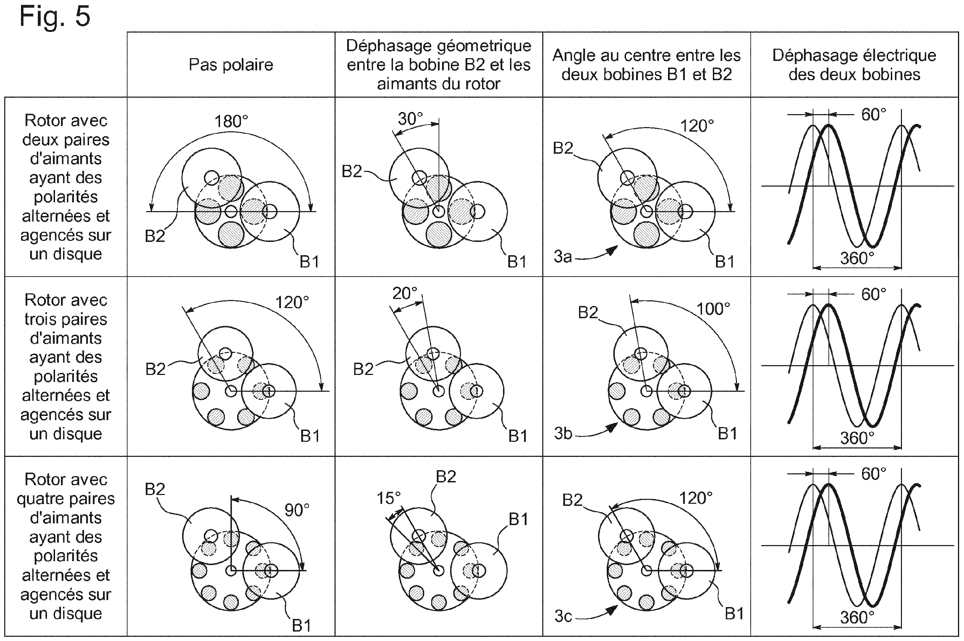

On connaît de la demande de brevet EP 0887913 A2 un procédé de commande d'un micromoteur à rotation continue prévu pour une application horlogère. Ce moteur comprend un stator formé de bobines plates et un rotor muni d'aimants permanents. Le rotor comprend une première paire d'aimants, de polarités opposées et agencés aux extrémités d'un premier flasque oblong situé sous les bobines du stator, et une seconde paire d'aimants, également de polarité opposées, qui sont agencés aux extrémités d'un second flasque oblong en face de la première paire d'aimants. Le rotor définit ainsi un circuit magnétique pour le flux des quatre aimants qui passe aux travers des bobines lorsque le rotor tourne, de sorte qu'une tension induite est générée dans ces bobines. Ce document propose deux modes de réalisation concernant le stator. Dans un premier mode de réalisation, représenté aux Fig.1 et Fig.2 du document, le stator comprend trois bobines plates agencées dans un plan général perpendiculaire à l'axe de rotation du rotor. Ces trois bobines sont décalées de 120°. Comme le rotor présente par flasque une seule paire d'aimants de polarités opposées, la période magnétique / le pas polaire du rotor est égal(e) à 360°. Les trois bobines sont agencées constamment en série, de sorte que le signal de tension induite totale aux deux bornes de sortie du circuit électrique formé par les trois bobines présente une forme sinusoïdale avec une période de 120°. Pour entretenir la rotation du rotor, le procédé de commande prévoit d'appliquer aux bobines en série des impulsions de tension motrices, d'une certaine durée bien inférieure au quart d'une période du signal de tension induite, et de déclencher chaque impulsion de tension motrice après un intervalle de temps fixe t₁ suivant un passage par zéro du signal de tension induite totale. L'intervalle de temps t₁ est choisi de sorte que, pour une vitesse de rotation nominale du rotor, les impulsions de tension motrices interviennent dans les zones de tension maximale mais légèrement en avance. A la Figure 4 du document, on voit que ces impulsions débutent avant les sommets du signal de tension induite totale et terminent sensiblement à la valeur maximale de ce signal. Comme exposé dans le document en lien avec la Fig.5, ce choix permet d'obtenir une certaine autorégulation de la vitesse de rotation du rotor.

Le premier mode de réalisation du document EP 0887913 A2 présente un problème d'efficacité et de robustesse en cas de chocs ou de mouvements brusques. Si lors d'un choc le rotor accélère brusquement, alors l'impulsion de tension motrice intervient après le passage par la valeur maximale de la tension induite, de sorte que l'énergie fournie est alors supérieure à celle prévue pour une rotation à une vitesse nominale constante. Il résulte de cette situation que le rotor va accélérer encore plus durant un certain nombre de périodes du signal de tension induite totale jusqu'à ce qu'il commence progressivement à être freiné. Ceci induit une instabilité. De plus, lors de mouvements du bras d'un utilisateur d'une montre, sans choc, le rotor subit de petites variations de vitesse de rotation. Le procédé prévu engendre également des instabilités dans ce cas, puisque les impulsions de tension motrices interviennent alors à des instants différents relativement aux instants où le signal de tension induite présente une valeur maximale absolue, c'est-à-dire en valeur absolue, ce qui a pour conséquence que la quantité d'énergie fournie au rotor lors de chaque impulsion motrice varie. S'il y a une certaine autorégulation lors d'une diminution de la vitesse de rotation, il n'en est pas de même lors d'une augmentation de cette vitesse, mais c'est le contraire qui se passe.

Concernant la configuration du moteur dans le premier mode de réalisation, on notera que les trois bobines occupent quasi l'entier de l'espace autour de l'arbre du rotor dans leur plan général, de sorte qu'aucun couplage mécanique entre le rotor et une roue d'un rouage entraîné par ce rotor n'est possible dans ce plan. Une telle configuration nécessite donc un couplage mécanique dans un plan supérieur ou inférieur à la partie du rotor formée par les deux flasques et les aimants permanents (on notera que les aimants doivent être situés à proximité des bobines pour assurer un bon couplage aimants-bobines). Ceci pose un problème d'encombrement en nécessitant une construction relativement haute, le rotor étant décalé en hauteur relativement à la roue qui engrène avec le pignon de sortie du couple mécanique fourni par le moteur électrique, ce pignon devant être situé sur l'arbre du rotor en-dessus / en-dessous de la partie de rotor susmentionnée.

Dans le second mode de réalisation proposé dans le document EP 0887913 A2, il est prévu un rotor identique et un stator formé de seulement deux bobines plates diamétralement opposées relativement à l'axe de rotation du rotor. Dans ce cas, on comprend que les deux bobines doivent présenter chacune un sens d'enroulement du fil électrique qui est opposé à l'autre pour avoir une tension induite non nulle aux bornes des deux bobines qui sont agencées constamment en série. Le procédé de commande décrit précédemment présente ici les mêmes désavantages. On remarquera notamment que, bien que l'on ait supprimé une bobine, le problème d'encombrement reste identique. Il n'est guère envisageable de pouvoir agencer une roue dans le plan général des deux bobines qui pourrait être couplée avec un pignon de l'arbre prévu dans ce plan général. Si on voulait néanmoins réaliser un tel montage, la roue devrait être de petit diamètre de sorte que le rapport de réduction entre le rotor et cette roue du rouage entraîné serait faible, ce qui est généralement un désavantage puisqu'une roue supplémentaire sera alors certainement nécessaire. Ce second mode de réalisation présente encore un problème supplémentaire par le fait que l'agencement des deux bobines avec un déphasage électrique nul ne permet plus de déterminer le sens de rotation du rotor sans ajouter un capteur supplémentaire à cet effet, chose qui est proposée au dernier paragraphe de la description du document en question.

Le moteur électrique divulgué dans le document EP 0887913 A2 présente en plus un autre problème. L'agencement prévu ne permet pas de démarrer efficacement le moteur électrique, c'est-à-dire de mettre en rotation le rotor, sans l'agencement d'un élément magnétique supplémentaire extérieur au moteur. En effet, pour permettre un démarrage du moteur, un aimant de positionnement du rotor au repos (non entraîné) est ajouté à la périphérie du rotor. Cet aimant interagit donc constamment avec les aimants du rotor et non seulement lorsque ce dernier est au repos. Ceci constitue une perturbation pour la rotation continue du rotor à une vitesse que l'on veut la plus stable possible. Le document US4492910 décrit un moteur électrique suivant le préambule de la revendication 1.

### Résumé de l'invention

La présente invention a pour objectif général de fournir un moteur électrique qui résolve au moins en partie les problèmes du moteur électrique de l'art antérieur décrit précédemment et pour objectif spécifique de fournir un mode de réalisation principal d'un tel moteur électrique qui résolve l'ensemble des problèmes susmentionnés. De plus, il est prévu de fournir un mouvement électromécanique horloger équipé d'un moteur selon le mode de réalisation principal de l'invention.

A cet effet, la présente invention concerne un moteur électrique à rotation continue, comprenant un rotor muni d'aimants permanents et un stator formé de bobines, dans lequel les aimants permanents et les bobines sont agencés de manière que les bobines définissent, relativement à la tension induite générée dans chacune d'elles lorsque le rotor est entraîné en rotation, essentiellement une première phase et une seconde phase. Ainsi, deux signaux de tension induite pouvant être générés respectivement dans deux bobines quelconques parmi les bobines du moteur électrique sont soit en phase, soit présentent sensiblement un déphasage électrique ϕ qui correspond au déphasage électrique entre la première phase et la seconde phase. De manière générale, ce déphasage électrique a une valeur entre cinq et nonante degrés inclus (5° ≤ ϕ ≤ 90°). En outre, le moteur électrique comprend un dispositif de commande comprenant un circuit de détection d'instants de croisement auxquels un premier signal de tension induite, généré par le rotor tournant dans une bobine ou des bobines appartenant à la première phase, a une valeur sensiblement égale à celle d'un deuxième signal de tension induite, généré par le rotor tournant dans une bobine ou des bobines appartenant à la seconde phase, les premier et deuxième signaux de tension induite présentant ainsi entre eux ledit déphasage électrique. Le dispositif de commande est agencé de manière à pouvoir engendrer des impulsions électriques motrices, pour entraîner en rotation le rotor, qui sont respectivement déclenchées à des instants de déclenchement déterminés par des instants de croisement respectifs, le dispositif de commande étant agencé de manière que lesdites impulsions électriques motrices puissent être appliquées à un ensemble de bobines formé au moins par une bobine de la première phase et au moins une bobine de la seconde phase qui sont agencées en série lors de l'application des impulsions électriques motrices.

Dans une variante préférée, le déphasage électrique ϕ a une valeur entre trente et soixante-cinq degrés (30° < ϕ < 65°).

Dans une variante préférée, le dispositif de commande est agencé de sorte que les instants de déclenchement des impulsions électriques motrices interviennent directement après des détections d'instants de croisement correspondants, aucune temporisation n'étant prévue pour générer ces impulsions électriques motrices suite aux détections des instants de croisement correspondants.

Dans une variante avantageuse, la tension d'alimentation appliquée, lors de l'application desdites impulsions électriques motrices, au travers de ladite au moins une bobine de la première phase et de ladite au moins une bobine de la seconde phase, qui sont alors agencées en série, est prévue supérieure à la valeur maximale de la somme de leurs tensions induites et inférieure à cent cinquante pourcent (150%) de cette valeur maximale lorsque le rotor tourne avec une vitesse angulaire nominale.

Dans un mode de réalisation particulier, le circuit de commande comprend en outre au moins un interrupteur agencé de manière à permettre d'alimenter séparément et sélectivement au moins une bobine de la première phase et au moins une bobine de la seconde phase, le circuit de commande étant agencé pour pouvoir, lors d'une phase de démarrage du moteur électrique, alimenter premièrement une des première et seconde phases pour positionner le rotor puis l'autre de ces première et seconde phases pour mettre en rotation le rotor dans le sens voulu.

Dans une variante avantageuse, le dispositif de commande comprend encore au moins un interrupteur permettant momentanément d'isoler électriquement la bobine ou les bobines engendrant le premier signal de tension induite de la bobine ou des bobines engendrant le deuxième signal de tension induite pour permettre la détection des instants de croisement par le circuit de détection. Le circuit de détection comprend un comparateur dont les deux entrées sont reliées respectivement à une première borne de la ou des bobine(s) engendrant le premier signal de tension induite et à une première borne de la ou des bobine(s) engendrant le deuxième signal de tension induite. En particulier, le dispositif de commande est agencé de sorte que, lors de phases de détection desdits instants de croisement, les deux secondes bornes correspondantes sont momentanément reliées via deux interrupteurs respectifs à une tension de référence.

Dans une variante particulière, le circuit de commande comprend en outre un comparateur dont les deux entrées sont reliées à deux bornes d'une bobine ou d'un ensemble de bobines appartenant à l'une des première et seconde phases, de manière à permettre de détecter le sens de rotation du rotor en association avec le circuit de détection d'instants de croisement.

Dans un mode réalisation principal, le stator est formé par seulement deux bobines plates qui constituent respectivement les première et seconde phases, les aimants du rotor ayant une polarisation axiale alternée.

### Brève description des figures

L'invention sera décrite ci-après de manière plus détaillée à l'aide des dessins annexés, donnés à titre d'exemples nullement limitatifs, dans lesquels :
- La Figure 1 est une représentation schématique d'un mode de réalisation principal d'un moteur électrique à rotation continue de l'invention,
- La Figure 2 est une vue partielle en coupe horizontale d'un mouvement horloger électromécanique incorporant une variante particulière du moteur électrique selon le mode principal de l'invention,
- La Figure 3 est une vue en coupe horizontale du rotor du moteur électrique de la Figure 2,
- La Figure 4 est une coupe transversale, selon la ligne IV - IV, du mouvement horloger de la Figure 2,
- La Figure 5 est une représentation schématique, sous forme de tableau, de trois variantes du mode de réalisation principal dans lesquelles les rotors des trois moteurs électriques correspondants présentent dans l'agencement de leurs aimants des pas polaires différents, soit 180°, 120° et 90°,
- La Figure 6 représente un dispositif de commande associé aux deux bobines du stator du mode de réalisation principal,
- La Figure 7 montre les tensions induites dans les deux bobines et la tension induite totale générée dans les deux bobines agencées en série, ainsi que l'application d'impulsion de tension motrices selon un procédé de commande du moteur électrique avantageux, et
- Les Figures 8A et 8B représentent les deux tensions induites dans les deux bobines et deux signaux dérivés de ces deux signaux de tension induite dans une phase périodique de détection d'un instant de croisement des deux signaux de tension induite et du sens de rotation.

### Description détaillée d'un mode de réalisation principal

A la Figure 1 est représenté schématiquement un moteur électrique 1 à rotation continue selon un mode de réalisation principal de l'invention. Ce moteur électrique comprend un stator formé par seulement de deux bobines plates A et B et par un rotor 3 comprenant deux flasques à haute perméabilité magnétique 3a parallèles portant des aimants 3b. Les deux parties formées respectivement des deux flasques portant leurs aimants définissent entre elles un espace intermédiaire dans lequel pénètrent les deux bobines plates B1 et B2. Les aimants et les deux bobines plates sont agencés de manière à présenter entre eux un couplage magnétique de sorte que, lorsque le rotor est entraîné en rotation, un signal périodique de tension induite est engendré dans chacune des deux bobines. Chacun des flasques 3a porte, du côté de l'espace intermédiaire, des aimants ou parties aimantées 3b agencé(e)s de manière régulière autour de l'axe de rotation 14 et ayant une polarisation axiale alternée, c'est-à-dire que la polarisation magnétique des aimants ou parties aimantées est sensiblement parallèle à l'axe 14 ou plus généralement que le flux magnétique généré par ces aimants ou parties aimantées dans l'espace intermédiaire susmentionné est principalement dirigé selon l'axe 14 et que les deux polarités magnétiques de toute paire d'aimants adjacents sont opposées. En particulier, les deux flaques sont constituées de matériau ferromagnétique.

Les aimants permanents 3b et les deux bobines B1, B2 sont agencés de manière que ces deux bobines définissent respectivement une première phase et une seconde phase en relation avec la tension induite générée dans chacune d'elles lorsque le rotor 3 est entraîné en rotation. Ainsi, les deux signaux périodiques de tension induite, qui sont respectivement générés dans les deux bobines lorsque le rotor tourne, présentent un déphasage électrique ϕ non nul correspondant au déphasage électrique entre les deux bobines, c'est-à-dire entre la première phase et la seconde phase. Ce déphasage électrique a, dans une variante générale, une valeur entre cinq et nonante degrés inclus (5° ≤ ϕ ≤ 90°).

Le moteur électrique 1 comprend encore un dispositif de commande 5 qui est relié électriquement aux deux bobines (indiqué schématiquement par deux traits à la Fig.1). Ce dispositif de commande sert notamment à gérer l'application d'impulsions électriques motrices (nommées aussi 'impulsions motrices') pour entraîner en rotation le moteur électrique selon un procédé de commande qui utilise la détection des instants de croisement des deux signaux périodiques de tension induite susmentionnés pour déterminer les instants de déclenchement de ces impulsions motrices qui sont appliquées au travers des deux bobines agencées en série au moins lors de l'application des impulsions motrices. Ainsi, le dispositif de commande est agencé de manière à pouvoir engendrer des impulsions motrices au travers de deux bobines agencées en série et ce dispositif de commande comprend un circuit 7 de détection d'instants de croisement auxquels le premier signal de tension induite, généré par le rotor tournant dans une des deux bobines B1 et B2 définissant la première phase, a une valeur sensiblement égale à celle d'un deuxième signal de tension induite, généré par le rotor tournant dans l'autre des deux bobines définissant la seconde phase. On remarquera que les premier et deuxième signaux de tension induite présentent entre eux le déphasage électrique ϕ. Le dispositif de commande et le procédé de commande qui lui est associé seront exposés de manière plus détaillée par la suite.

En référence aux Figures 2 à 4, on décrira un mouvement horloger électromécanique incorporant une variante particulière du moteur électrique selon le mode principal de l'invention. Le mouvement horloger 2 comprend un moteur électrique 4 formé par un stator 6 et un rotor 8. Le stator comprend deux bobines plates B1 et B2 ayant chacune un axe central 12 qui est parallèle à l'axe de rotation 14 du rotor. Les bobines représentées ont la forme d'un disque plat. Cependant, d'autres profils extérieurs qu'un profil circulaire sont envisageables, notamment un profil ovoïde ou trapézoïdal.

Le rotor 8 comprend un arbre central 16, deux tôles à haute perméabilité magnétique 18 et 20 en forme de disque (aussi nommées 'tôles magnétiques') qui sont montées sur l'arbre central et une pluralité d'aimants ou de parties aimantées 22,23 qui sont polarisés axialement et agencés fixement sur la tôle magnétique 18 de manière à être situé(e)s entre les deux tôles magnétiques. Dans cette variante, la tôle magnétique supérieure 20 sert seulement de plaque de fermeture des lignes de champ du flux magnétique généré par les aimants. Les deux tôles magnétiques forment ensemble une structure de blindage servant à substantiellement confiner les flux magnétiques des aimants dans le volume défini par le rotor et un petit volume latéral à sa périphérie. Dans une autre variante avantageuse (voir Fig.1), les aimants sont portés à parts égales par les deux tôles magnétiques. Dans ce cas, les aimants sont alignés axialement par paire d'aimants ayant une même polarité de manière à engendrer entre eux un flux magnétique sensiblement axial. Dans la variante représentée, les polarités des aimants agencés sur une même tôle sont alternées, ce qui distingue les aimants 22 des aimants 23. Dans cette variante, il est prévu six aimants sur la tôle magnétique 18, soit trois paires d'aimants adjacents présentant des polarités opposées (voir Fig.3). Les aimants sont agencés circulairement et régulièrement sur la tôle magnétique 18 de sorte à définir un pas polaire de 120°. D'autres nombres d'aimants et donc d'autres pas polaires sont prévus dans des variantes, comme ceci sera décrit par la suite.

On remarquera que les aimants peuvent être formés par 2N aimants bipolaires distincts qui présentent chacun une polarisation axiale et qui sont initialement séparés l'un de l'autre avant leur fixation sur l'une des deux tôles magnétiques ; mais ces aimants peuvent aussi être formés par des parties respectives d'un aimant multipolaire annulaire ayant 2N pôles magnétiques au niveau de sa surface externe qui est opposée à la tôle ferromagnétique à laquelle il est fixé. Dans les deux cas, on a 2N paires de pôles magnétiques avec des polarités alternées Nord - Sud au niveau de la surface externe des aimants bipolaires et de l'aimant multipolaire, N étant un nombre entier supérieur à zéro et de préférence supérieur à un.

Les deux bobines plates B1 et B2 s'étendent dans un plan général 25, situé entre les deux tôles magnétiques 18 et 20, à distance axiale de la pluralité d'aimants. Le rotor et les deux bobines sont configurés de manière que ces deux bobines sont situées partiellement dans un espace de révolution 26 qui est défini par le rotor entre ses deux tôles magnétiques depuis son arbre central 16 jusqu'à son pourtour 28 et qui est laissé libre par ce rotor, en particulier par ses aimants. L'arbre central comprend un pignon 30 dont l'axe central est confondu avec l'axe de rotation 14, ce pignon engrenant avec une roue 32 d'un mécanisme d'affichage analogique du mouvement horloger 2. Le stator est configuré de manière à laisser libre un secteur angulaire 34 de l'espace de révolution 26 dont l'angle d'ouverture α est sélectionné pour permettre une pénétration radiale de la roue 32 dans l'espace de révolution jusqu'à l'arbre central 16 en demeurant dans ce secteur angulaire. De manière remarquable, le pignon 30 est agencé entre les deux tôles magnétiques 18 et 20 et présente au moins une partie située entre deux plans géométriques 38 et 39 définissant ledit espace de révolution selon l'axe de rotation 14. Ainsi, la roue 32 est partiellement agencée entre les deux tôles magnétiques, dans ledit secteur angulaire de l'espace de révolution, de manière à engrener avec le pignon 30 pour permettre l'entraînement de cette roue.

De préférence, la roue 32 est configurée et/ou constituée d'un matériau spécifique pour diminuer, voire éliminer des pertes énergétiques par courant de Foucault. A titre d'exemple, le plateau de la roue 32 présente un moyeu et une jante reliés par quelques rayons. Dans une variante avantageuse, le matériau formant le plateau est un alliage métallique du type Inconel® qui présente une résistivité très supérieure à celle du laiton. Pour éliminer complétement les pertes en question, le plateau peut être constitué par un matériau synthétique, par exemple du polyoxyméthylène ('POM'). De manière générale, on évitera un matériau magnétique pour le plateau de la roue. Il en va de même pour l'axe de la roue 32, ceci afin d'éviter que le rotor n'exerce une force d'attraction sur cet axe, et réciproquement. En effet, dans le cas contraire, des pertes par frottement seraient générées au niveau des paliers dans lesquels pivote la roue 32 et le rotor 8. L'axe sera par exemple réalisé avec un alliage cuivre-béryllium ou en matière plastique.

Selon une variante avantageuse, la roue 32 s'étend dans le plan général 25 des deux bobines B1 et B2 avec son axe 42 agencé à la périphérie du rotor et le pignon 30 est agencé au niveau de ce plan général. En particulier, l'angle d'ouverture α du secteur angulaire 34 prévu pour cette roue est supérieur à 120°. De préférence, cet angle est supérieur à 130°. Dans cette dernière variante préférée, les deux bobines sont ainsi agencées dans un même plan général, perpendiculaire à l'axe de rotation du rotor, de manière à occuper un secteur angulaire, relativement à cet axe de rotation, qui est inférieur à 230°.

Selon une variante avantageuse, la roue 32 et les deux bobines B1 et B2 présentent des dimensions telles que les zones angulaires entre elles présentent un angle au centre inférieur à 10°, pour permettre d'agencer des bobines avec de relativement grands diamètres.

L'angle géométrique β défini entre les deux axes 12 des deux bobines B1 et B2 et l'axe de rotation 14 est égal à 104° dans une variante spécifique permettant d'optimiser le rapport de réduction entre le pignon 30 et la roue 32 tout en ayant une tension induite dans les bobines qui présente une amplitude suffisante pour pouvoir entraîner efficacement le moteur électrique avec une relativement faible consommation d'énergie électrique. Avec un pas polaire de 120° pour le rotor, le déphasage électrique ϕ entre les deux signaux de tension induite générés respectivement dans les deux bobines B1, B2 est égal à 48°, soit 360°/120° multiplié par 120°-104°. Dans une variante avantageuse, le déphasage électrique ϕ a une valeur entre dix et nonante degrés inclus (10° ≤ ϕ ≤ 90°). Dans une variante préférée, le déphasage électrique ϕ a une valeur entre trente et soixante-cinq degrés (30° < ϕ < 65°).

A la Figure 5 sont représentées schématiquement, sous forme de tableau, trois variantes particulières du mode de réalisation principal de l'invention. Ces trois variantes ont en commun un déphasage électrique ϕ égal à 60° entre les deux bobines du moteur électrique, c'est-à-dire entre leurs signaux de tension induite qui sont représentés dans la dernière colonne du tableau. La première variante comprend un rotor 3a ayant deux paires d'aimants avec des polarités alternées (représentés par des disques hachurés) et agencés régulièrement sur un disque ferromagnétique formant une tôle magnétique du rotor. Le déphasage géométrique entre la bobine B2 et l'aimant le plus proche est calculé alors que la bobine B1 est alignée sur un des aimants. On observe que la relation mathématique entre le déphasage électrique et le déphasage géométrique susmentionné est donné par (360°/ pas polaire) x déphasage géométrique. La deuxième variante comprend, comme dans la variante décrite aux Figures 2 à 4, un rotor 3b ayant trois paires d'aimants, avec des polarités alternées, qui sont agencés sur un disque ferromagnétique. La troisième variante comprend un rotor 3c ayant quatre paires d'aimants, avec des polarités alternées, qui sont agencés régulièrement sur un disque ferromagnétique.

Le moteur électrique de chacune des trois variantes comprend avantageusement deux disques magnétiques munis d'aimants à polarisation axiale, c'est-à-dire un agencement similaire à celui de la variante représentée à la Figure 1. On observe que, pour un déphasage électrique ϕ égal à 60°, la deuxième variante présente un avantage au niveau du secteur angulaire laissé libre dans le plan des deux bobines, notamment pour l'agencement d'une roue comme exposé précédemment. En effet, dans cette deuxième variante, l'angle au centre entre les bobines B1 et B2 est égal à 100°, alors qu'il est égal à 120° dans les deux autres variantes.

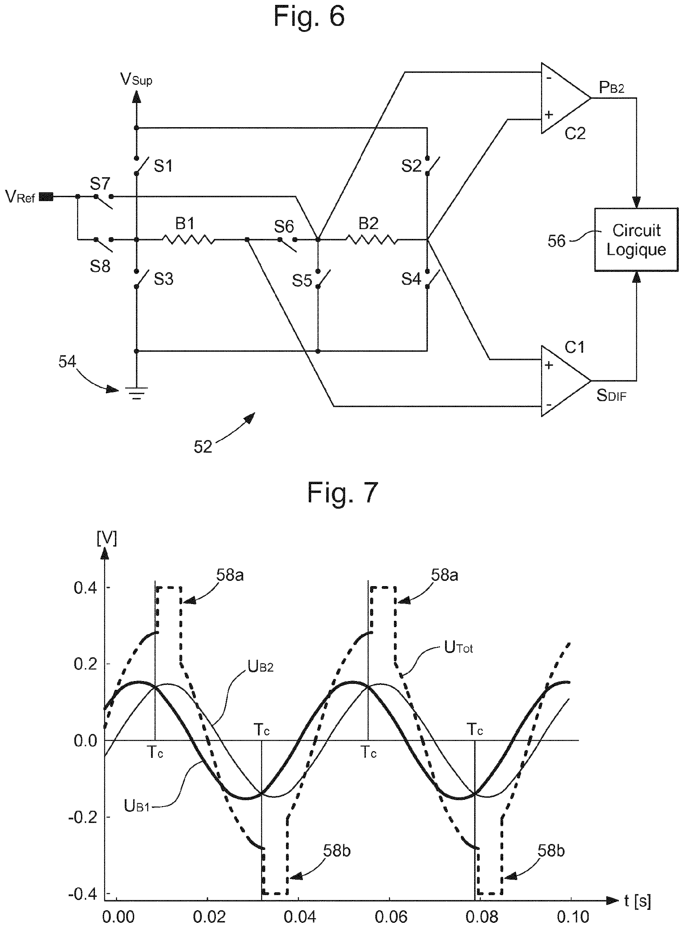

En référence aux Figures 6 à 8B, on décrira ci-après une variante de réalisation du dispositif de commande du moteur électrique selon le mode de réalisation principal, ainsi que son fonctionnement selon un procédé de commande du moteur électrique implémenté dans le dispositif de commande.

La Figure 6 représente le circuit électrique du dispositif de commande 52 qui gère l'alimentation électrique des bobines B1 et B2 pour faire fonctionner le moteur électrique, plus particulièrement pour l'application d'impulsions de tension motrices 58a et 58b aux deux bobines (Fig.7). Ce dispositif de commande est relié à une source d'alimentation délivrant une tension d'alimentation V_{Sup} et également à une tension de référence V_{Ref} qui est dérivée de la tension d'alimentation et qui a une valeur intermédiaire entre la masse 54 et la tension d'alimentation, en particulier une valeur égale à la moitié de cette tension d'alimentation. L'homme du métier connaît divers circuits électriques permettant de générer une telle tension de référence.

Le dispositif de commande comprend quatre interrupteurs S1,S2,S3 et S4 agencés dans une configuration en pont H relativement aux deux bobines B1 et B2, de manière à permettre une inversion du signe de la tension d'alimentation appliquée au travers des deux bobines dans une configuration en série et ainsi permettre d'appliquer des impulsions de tension positives et négatives. On notera que, dans une variante, il est prévu d'appliquer que des impulsions de tension positives, de sorte que l'interrupteur S4 peut être alors omis (l'interrupteur S1 restant utile pour démarrer le moteur électrique, comme indiqué ci-après).

Par 'interrupteur fermé', on comprend un interrupteur mis dans un état passant de sorte qu'un courant électrique peut le traverser. Ainsi, par 'interrupteur ouvert', on comprend un interrupteur dans un état non passant de sorte qu'aucun courant utile ne peut le traverser. Un interrupteur ouvert isole deux éléments qui sont agencés de part et d'autre de cet interrupteur.

Le dispositif de commande 52 comprend en outre au moins un interrupteur S5 agencé de manière à permettre d'alimenter séparément et sélectivement la première phase et la seconde phase, c'est-à-dire la première bobine B1 et la deuxième bobine B2 dans le mode de réalisation principal. Le circuit de commande est agencé pour pouvoir, lors d'une phase de démarrage du moteur électrique, alimenter premièrement une des première et seconde phases pour positionner le rotor puis l'autre de ces première et seconde phases pour mettre en rotation le rotor dans le sens voulu. Par exemple, dans la variante décrite, on ferme premièrement les interrupteurs S2 et S5 alors que les interrupteurs S1 et S4 sont ouverts et on alimente ainsi seulement la bobine B2, avec une tension positive, pour la mettre en regard d'un aimant du rotor. De préférence, la bobine B1 est mise en court-circuit en fermant les interrupteurs S3 et S6 pour amortir un mouvement d'oscillation du rotor et accélérer son positionnement de démarrage. On notera que l'interrupteur S6 est prévu pour un circuit de détection qui sera décrit par la suite. Ensuite, les interrupteurs S2 et S3 sont ouverts et l'interrupteur S1 est fermé (idem pour l'interrupteur S6 pour le cas où il ne serait pas déjà fermé), de sorte qu'on alimente alors seulement la bobine B1 avec une tension négative. Ceci permet de fournir une impulsion de démarrage de durée relativement longue et d'obtenir un bon couplage entre la bobine B1 et des aimants du rotor, de sorte que ce rotor peut être mis en rotation, avec un sens de rotation prédéterminé, à une vitesse suffisante pour permettre ensuite d'entretenir la rotation par des impulsions motrices. On a donc une phase de démarrage qui est suivie par une phase d'entretien de la rotation.

Le dispositif de commande 52 comprend encore un circuit de détection comprenant :
- un interrupteur S6 permettant momentanément d'isoler électriquement la bobine B1 de la bobine B2 pour permettre la détection d'instants de croisement Tc des deux signaux de tension induite U_{B1} et U_{B2} qui sont générés respectivement dans les deux bobines lorsque le rotor tourne ;
- un comparateur C1 dont les deux entrées sont reliées respectivement à une première borne de la bobine B1, laquelle fournit le premier signal de tension induite U_{B1}, et à une première borne de la bobine B2, laquelle fournit le deuxième signal de tension induite U_{B2}.

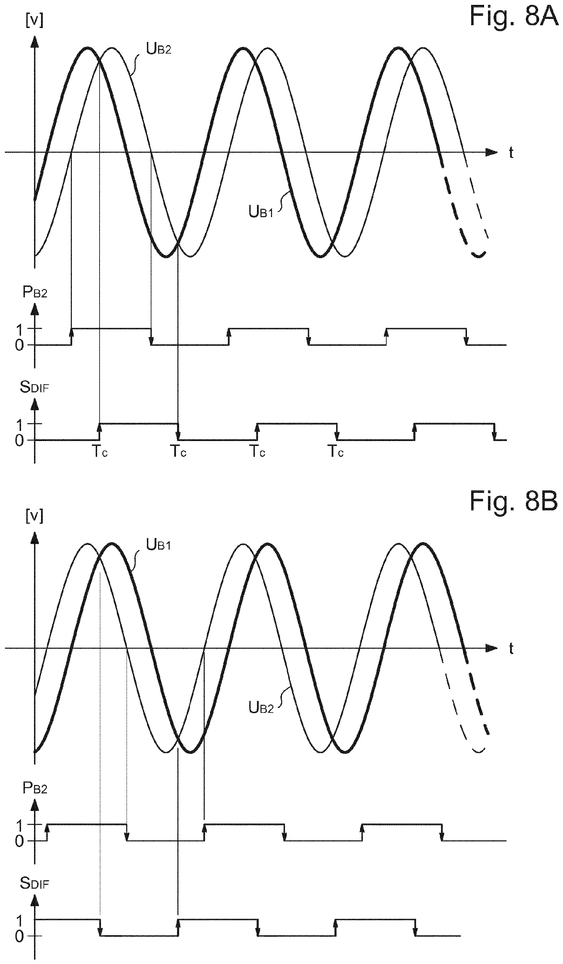

Le dispositif de commande est agencé de sorte que, lors de phases de détection des instants de croisement Tc par le circuit de détection, les deux secondes bornes correspondantes des deux bobines sont momentanément reliées via deux interrupteurs respectifs S7 et S8 à une tension de référence V_{Ref}. Le comparateur C1 fournit en sortie un signal S_{DIF} à un circuit logique 56 du dispositif de commande. Ce circuit logique sert notamment à la gestion temporelle des ouvertures et fermetures des divers interrupteurs du dispositif de commande. Les deux tensions induites et le signal S_{DIF} sont représentés à la Figure 8A pour un fonctionnement normal du moteur électrique dans le sens de rotation prévu. On notera que le circuit de détection proposé ici constitue une variante de réalisation nullement limitative, d'autres circuits pouvant être prévu par l'homme du métier à cet effet. Ce qui est important dans le cadre de la présente invention, c'est de pouvoir détecter des instants de croisement Tc des deux signaux de tension induite U_{B1}, U_{B2} qui sont déphasés l'un relativement à l'autre grâce à l'agencement des deux bobines et des aimants du rotor selon l'invention. De plus, on cherche à réduire la consommation électrique autant que faire se peut. La configuration du circuit de détection proposé permet d'atteindre ce but en n'utilisant qu'un simple comparateur de tension analogique et quelques interrupteurs.

Le circuit de commande 52 comprend en outre un comparateur C2 dont les deux entrées sont reliées aux deux bornes de la bobine B2. Ce comparateur C2 fournit en sortie un signal P_{B2} indiquant le signe du signal de tension induite U_{B2}. Comme montré aux Figures 8A et 8B, le signal P_{B2} et le signal S_{DIF}, fourni par le circuit de détection d'instants de croisement, permettent de détecter le sens de rotation du rotor. A la Figure 8A, correspondant au sens de rotation prévu, les flancs montants du signal S_{DIF} interviennent alors que le signal P_{B2} est dans son état logique '1' et les flancs descendants du signal S_{DIF} interviennent alors que le signal P_{B2} est dans son état logique '0'. A la Figure 8B, correspondant à une rotation dans le sens contraire au sens prévu, les flancs montants du signal S_{DIF} interviennent alors que le signal P_{B2} est dans l'état logique '0' et les flancs descendants du signal S_{DIF} interviennent alors que le signal P_{B2} est dans l'état logique '1'. Si le dispositif de commande détecte que le rotor tourne dans le mauvais sens, il réagira pour inverser le sens de rotation. Le dispositif de commande arrêtera rapidement le rotor, par exemple en court-circuitant au moins une bobine, et il effectuera directement une nouvelle phase de démarrage.

La Figure 7 montre la génération des impulsions de tension motrices au cours de la phase d'entretien de la rotation du rotor pour une variante préférée. Pour appliquer au moteur une impulsion motrice 58a avec une tension positive, le dispositif de commande 52 ferme, directement après une détection d'un instant de croisement Tc engendrant un flanc montant dans le signal S_{DIF}, les interrupteurs S2, S3, S6 et il ouvre tous les autres interrupteurs. Pour appliquer au moteur une impulsion motrice 58b avec une tension négative, le dispositif de commande 52 ferme, directement après une détection d'un instant de croisement Tc engendrant un flanc descendant dans le signal S_{DIF}, les interrupteurs S1, S4, S6 et il ouvre tous les autres interrupteurs. Ainsi, lors de l'application des impulsions motrices, les deux bobines B1 et B2 sont agencées en série. Dans cette configuration, aux bornes externes des deux bobines en série apparaît une tension induite totale U_{Tot} qui est la somme des deux tensions induites U_{B1} et U_{B2}.

Dans la variante préférée, les instants de déclenchement des impulsions électriques motrices interviennent directement après des détections d'instants de croisement correspondants, aucun moyen de temporisation n'étant prévu pour générer ces impulsions électriques motrices suite aux détections des instants de croisement correspondants. Un tel procédé de commande est avantageux car il permet d'appliquer les impulsions motrices dans des zones temporelles proches des maximas, en valeurs absolues, de la tension induite totale U_{Tot}, ce qui permet un bon couplage électromagnétique entre les aimants du rotor et les bobines et également de réduire les pertes d'énergie électrique par dissipation. On observe en effet que, pour deux signaux de tension induites U_{B1} et U_{B2} ayant tous deux une forme sinusoïdale avec une même amplitude, les instants de croisement Tc de ces deux signaux correspondent aux maximas absolus de la tension induite totale U_{Tot} qui est générée entre les deux bornes externes des deux bobines en série. Ainsi, en détectant les instants de croisement via le circuit de détection et en reliant en série les deux bobines au moins lors de l'application des impulsions de tension, on profite pleinement de l'observation susmentionnée, de sorte que le rotor peut être entraîné de manière efficace et sûre. On remarquera que la robustesse du procédé de commande décrit ici provient du fait que chaque impulsion motrice est engendrée sans temporisation après la détection d'un instant de croisement correspondant. Ainsi des variations de vitesse de rotation du rotor, notamment en cas de chocs ou dans le cadre du procédé de commande prévu, n'auront pas d'influences néfastes sur l'entraînement de ce rotor, en particulier sur l'efficacité du couplage électromagnétique pour l'entraîner et sur la consommation électrique du moteur.

Dans une variante avantageuse, la tension d'alimentation V_{Sup}, qui est appliquée lors de l'application des impulsions motrices au travers des deux bobines agencées en série, est prévue supérieure à la valeur maximale de la tension induite totale U_{Tot} et inférieure à cent cinquante pourcent (150%) de cette valeur maximale lorsque le rotor tourne avec une vitesse angulaire nominale. On réduit ainsi les pertes par dissipation d'énergie électrique. On notera que, pour fournir suffisamment d'énergie au rotor, on peut ajuster la durée des impulsions motrices et/ou leur fréquence. On notera encore que la valeur de la tension d'alimentation V_{Sup} peut être momentanément sélectionnée au-dessus de la plage de valeur susmentionnée quand on a besoin de puissance pour lutter contre des perturbations extérieures (par exemple dues à un champ magnétique ou des contraintes mécaniques). Finalement, dans une variante particulière, le dispositif de commande est agencé de manière à permettre d'agencer momentanément les deux bobines B1 et B2 en parallèle pour pouvoir fournir, notamment lors de perturbations extérieures, plus de courant au cours d'impulsions motrices et ainsi appliquer un plus grand moment de force au rotor.

## Revendications

1. Moteur électrique à rotation continue (1 ; 4) comprenant un rotor (3 ; 8) muni d'aimants permanents (3b ; 22,23) et un stator formé de bobines (B1,B2) couplées magnétiquement aux aimants permanents ; les aimants permanents et les bobines étant agencés de manière que les bobines définissent, relativement à la tension induite générée dans chacune d'elles lorsque le rotor est entraîné en rotation, essentiellement une première phase et une seconde phase, de sorte que deux signaux de tension induite générés respectivement dans deux bobines quelconques parmi lesdites bobines sont soit en phase, soit présentent sensiblement un déphasage électrique ϕ qui correspond au déphasage électrique entre la première phase et la seconde phase, ce déphasage électrique ayant une valeur entre cinq et nonante degrés inclus (5° ≤ ϕ ≤ 90°) ; **caractérisé en ce que** le moteur électrique comprend un dispositif de commande (52) comprenant un circuit de détection (C1) d'instants de croisement (Tc) auxquels un premier signal de tension induite (U_{B1}), généré par le rotor tournant dans une bobine ou des bobines appartenant à la première phase, a une valeur sensiblement égale à celle d'un deuxième signal de tension induite (U_{B2}) généré par le rotor tournant dans une bobine ou des bobines appartenant à la seconde phase, les premier et deuxième signaux de tension induite présentant ainsi entre eux ledit déphasage électrique ; et **en ce que** le dispositif de commande (52) est agencé de manière à pouvoir engendrer des impulsions électriques motrices (58a,58b), pour entraîner en rotation le rotor, qui sont respectivement déclenchées à des instants de déclenchement déterminés par des instants de croisement respectifs, le dispositif de commande étant agencé de manière que lesdites impulsions électriques motrices puissent être appliquées à un ensemble de bobines formé par au moins une bobine de la première phase et au moins une bobine de la seconde phase qui sont agencées en série au moins lors de l'application des impulsions électriques motrices.

2. Moteur électrique selon la revendication 1, **caractérisé en ce que** le déphasage électrique ϕ a une valeur entre dix et nonante degrés inclus (10° ≤ ϕ ≤ 90°).

3. Moteur électrique selon la revendication 1, **caractérisé en ce que** le déphasage électrique ϕ a une valeur entre trente et soixante-cinq degrés (30° < ϕ < 65°).

4. Moteur électrique selon une quelconque des revendications précédentes, **caractérisé en ce que** le dispositif de commande (52) comprend au moins un interrupteur (S6) permettant momentanément d'isoler électriquement la bobine ou les bobines engendrant ledit premier signal de tension induite de la bobine ou des bobines engendrant ledit deuxième signal de tension induite pour permettre la détection desdits instants de croisement par le circuit de détection ; **en ce que** le circuit de détection comprend un comparateur (C1) dont les deux entrées sont reliées respectivement à une première borne de la ou des bobine(s) engendrant ledit premier signal de tension induite (U_{B1}) et à une première borne de la ou des bobine(s) engendrant ledit deuxième signal de tension induite (U_{B2}) ; et **en ce que** le dispositif de commande est agencé de sorte que, lors de phases de détection desdits instants de croisement, les deux secondes bornes correspondantes sont momentanément reliées via deux interrupteurs respectifs (S7,S8) à une tension de référence (V_{Ref}).

5. Moteur électrique selon une quelconque des revendications précédentes, **caractérisé en ce que** le dispositif de commande (52) est agencé de sorte que lesdits instants de déclenchement desdites impulsions électriques motrices (58a,58b) interviennent directement après des détections d'instants de croisement correspondants (Tc), aucun moyen de temporisation n'étant prévu pour générer ces impulsions électriques motrices suite aux détections des instants de croisement correspondants.

6. Moteur électrique selon une quelconque des revendications précédentes, **caractérisé en ce que** le circuit de commande (52) comprend en outre un comparateur (C2) dont les deux entrées sont reliées à deux bornes d'une bobine (B2) ou d'un ensemble de bobines appartenant à une des première et seconde phases, de manière à permettre de détecter le sens de rotation du rotor en association avec le circuit de détection d'instants de croisement.

7. Moteur électrique selon une quelconque des revendications précédentes, **caractérisé en ce que** la tension d'alimentation (V_{Sup}) appliquée, lors de l'application desdites impulsions électriques motrices (58a,58b), au travers de ladite au moins une bobine (B1) de la première phase et de ladite au moins une bobine (B2) de la seconde phase, qui sont alors agencées en série, est prévue supérieure à la valeur maximale de la somme de leurs tensions induites et inférieure à cent cinquante pourcent (150%) de cette valeur maximale lorsque le rotor tourne avec une vitesse angulaire nominale.

8. Moteur électrique selon une quelconque des revendications précédentes, **caractérisé en ce que** le circuit de commande (52) comprend en outre au moins un interrupteur (S5) agencé de manière à permettre d'alimenter séparément et sélectivement au moins une bobine (B1) de la première phase et au moins une bobine (B2) de la seconde phase, le circuit de commande étant agencé pour pouvoir, lors d'une phase de démarrage du moteur électrique, alimenter premièrement une des première et seconde phases pour positionner le rotor puis l'autre de ces première et seconde phases pour mettre en rotation le rotor dans le sens voulu.

9. Moteur électrique selon une quelconque des revendications précédentes, **caractérisé en ce que** le stator est formé par seulement deux bobines plates (B1, B2) qui constituent respectivement les première et seconde phases, les aimants permanents du rotor ayant une polarisation axiale alternée.

10. Mouvement de montre (2) comprenant un moteur électrique (4) selon la revendication 9, **caractérisée en ce que** les deux bobines (B1,B2) sont agencées dans un même plan général, perpendiculaire à l'axe de rotation (14) du rotor, de manière à occuper un secteur angulaire, relativement à l'axe de rotation du rotor, qui est inférieur à 230°, pour permettre l'agencement dans ce plan général d'une roue (32) de transmission du mouvement de rotation du rotor (8), le rotor comprenant à cet effet un pignon (30) agencé au niveau dudit plan général et dont l'axe central est confondu avec l'axe de rotation du rotor.

## Patentansprüche

1. Kontinuierlich drehender Elektromotor (1; 4), umfassend einen Rotor (3; 8), der mit Permanentmagneten (3b; 22, 23) ausgestattet ist, und einen Stator, der von Spulen (B1, B2) gebildet wird, die magnetisch an die Permanentmagnete gekoppelt sind;
wobei die Permanentmagnete und die Spulen so angeordnet sind, dass die Spulen, in Bezug auf die induzierte Spannung, die in jeder von ihnen erzeugt wird, wenn der Rotor in Drehung versetzt wird, im Wesentlichen eine erste Phase und eine zweite Phase definieren, sodass zwei Signale induzierter Spannung, die jeweils in irgendwelchen zwei Spulen unter den Spulen erzeugt werden, entweder phasengleich sind oder im Wesentlichen eine elektrische Phasenverschiebung ϕ aufweisen, die der elektrischen Phasenverschiebung zwischen der ersten Phase und der zweiten Phase entspricht, wobei diese elektrische Phasenverschiebung einen Wert zwischen einschließlich fünf und neunzig Grad (5° ≤ ϕ ≤ 90°) aufweist; **dadurch gekennzeichnet, dass** der Elektromotor eine Steuervorrichtung (52) umfasst, umfassend eine Empfangsschaltung (C1) von Kreuzungsmomenten (Tc), in denen ein erstes Signal induzierter Spannung (U_{B1}), das von dem Rotor erzeugt wird, der sich in einer Spule oder Spulen dreht, die zu der ersten Phase gehören, einen Wert aufweist, der im Wesentlichen gleich ist wie jener eines zweiten Signals induzierter Spannung (U_{B2}), das von dem Rotor erzeugt wird, der sich in einer Spule oder Spulen dreht, die zu der zweiten Phase gehören, wobei die ersten und zweiten Signale induzierter Spannung untereinander die elektrische Phasenverschiebung aufweisen; und dadurch, dass die Steuervorrichtung (52) angeordnet ist, um elektrische Antriebsimpulse (58a, 58b) erzeugen zu können, um den Rotor in Drehung zu versetzen, die jeweils in Auslösungsmomenten ausgelöst werden, die von den jeweiligen Kreuzungsmomenten bestimmt werden, wobei die Steuervorrichtung so angeordnet ist, dass die elektrischen Antriebsimpulse auf eine Spuleneinheit angewendet werden können, die von wenigstens einer Spule der ersten Phase und wenigstens einer Spule der zweiten Phase gebildet wird, die in Reihe wenigstens bei der Anwendung der elektrischen Antriebsimpulse angeordnet sind.

2. Elektromotor nach Anspruch 1, **dadurch gekennzeichnet, dass** die elektrische Phasenverschiebung ϕ einen Wert zwischen einschließlich zehn und neunzig Grad (10° ≤ ϕ ≤ 90°) aufweist.

3. Elektromotor nach Anspruch 1, **dadurch gekennzeichnet, dass** die elektrische Phasenverschiebung ϕ einen Wert zwischen dreißig und fünfundsechzig Grad (30° < ϕ < 65°) aufweist.

4. Elektromotor nach einem der vorstehenden Ansprüche, **dadurch gekennzeichnet, dass** die Steuervorrichtung (52) wenigstens einen Schalter (S6) umfasst, der es ermöglicht, die Spule oder die Spulen, die das erste Signal induzierter Spannung erzeugen, von der Spule oder den Spulen, die das zweite Signal induzierter Spannung erzeugen, augenblicklich elektrisch zu trennen, um den Empfang der Kreuzungsmomente durch die Empfangsschaltung zu ermöglichen; dadurch, dass die Empfangsschaltung einen Komparator (C1) umfasst, dessen zwei Eingänge jeweils mit einer ersten Klemme der Spulen(n), die das erste Signal induzierter Spannung (U_{B1}) erzeugen, und mit einer zweiten Klemme der Spule(n), die das zweite Signal induzierter Spannung (U_{B2}) erzeugen, verbunden sind; und dadurch, dass die Steuervorrichtung so angeordnet ist, dass, bei Empfangsphasen der Kreuzungsmomente, die entsprechenden zwei zweiten Klemmen über zwei jeweilige Schalter (S7, S8) mit einer Referenzspannung (V_{Ref}) augenblicklich verbunden werden.

5. Elektromotor nach einem der vorstehenden Ansprüche, **dadurch gekennzeichnet, dass** die Steuervorrichtung (52) so angeordnet ist, dass die Auslösungsmomente der elektrischen Antriebsimpulse (58a, 58b) direkt nach Empfängen entsprechender Kreuzungsmomente (Tc) stattfinden, wobei kein Verzögerungsmittel vorgesehen ist, um diese elektrischen Antriebsimpulse infolge von Empfängen entsprechender Kreuzungsmomente zu erzeugen.

6. Elektromotor nach einem der vorstehenden Ansprüche, **dadurch gekennzeichnet, dass** die Steuerschaltung (52) weiter einen Komparator (C2) umfasst, dessen zwei Eingänge mit zwei Klemmen einer Spule (B2) oder einer Spuleneinheit, die zu einer der ersten und zweiten Phasen gehören, verbunden sind, um es zu ermöglichen, die Drehrichtung des Rotors in Verbindung mit der Empfangsschaltung von Kreuzungsmomenten zu empfangen.

7. Elektromotor nach einem der vorstehenden Ansprüche, **dadurch gekennzeichnet, dass** die Versorgungsspannung (Vsup), die, bei der Anwendung der elektrischen Antriebsimpulse (58a, 58b), durch die wenigstens eine Spule (B1) der ersten Phase und die wenigstens eine Spule (B2) der zweiten Phase, die nun in Reihe angeordnet sind, angewendet wird, höher als der Maximalwert der Summe ihrer induzierten Spannungen und niedriger als hundertfünfzig Prozent (150 %) dieses Maximalwerts vorgesehen ist, wenn sich der Rotor mit einer Nennwinkelgeschwindigkeit dreht.

8. Elektromotor nach einem der vorstehenden Ansprüche, **dadurch gekennzeichnet, dass** die Steuerschaltung (52) weiter wenigstens einen Schalter (S5) umfasst, der angeordnet ist, um es zu ermöglichen, wenigstens eine Spule (B1) der ersten Phase und wenigstens eine Spule (B2) der zweiten Phase getrennt und selektiv zu versorgen, wobei die Steuerschaltung angeordnet ist, um, bei einer Anlaufphase des Elektromotors, zuerst eine der ersten und zweiten Phase versorgen zu können, um den Rotor zu positionieren, und dann die andere dieser ersten und zweiten Phase, um den Rotor in der gewünschten Richtung in Drehung zu versetzen.

9. Elektromotor nach einem der vorstehenden Ansprüche, **dadurch gekennzeichnet, dass** der Stator von nur zwei Flachspulen (B1, B2) gebildet wird, die jeweils die erste und zweite Phasen bilden, wobei die Permanentmagnete des Rotors eine wechselnde axiale Polarisation aufweisen.

10. Uhrwerk (2), umfassend einen Elektromotor (4) nach Anspruch 9, **dadurch gekennzeichnet, dass** die zwei Spulen (B1, B2) in einer gleichen allgemeinen Ebene, senkrecht zu der Drehachse (14) des Rotors, angeordnet sind, sodass ein Winkelsektor in Bezug auf die Drehachse des Rotors eingenommen wird, der kleiner als 230° ist, um die Anordnung eines Antriebsrads (32) für die Drehbewegung des Rotors (8) in dieser allgemeinen Ebene zu ermöglichen, wobei der Rotor dazu einen Trieb (30) umfasst, der auf Höhe der allgemeinen Ebene angeordnet ist und dessen Mittelachse mit der Drehachse des Rotors zusammenfällt.

## Claims

1. Continuously rotating electric motor (1; 4) comprising a rotor (3; 8) equipped with permanent magnets (3b; 22, 23) and a stator formed by coils (B1, B2) magnetically coupled with the permanent magnets; the permanent magnets and the coils being arranged such that the coils define, relative to the induced voltage generated in each of these coils when the rotor is rotated, substantially a first phase and a second phase, such that the two induced voltage signals respectively generated in any two coils of said coils are either in phase, or substantially have an electric phase shift ϕ which corresponds to the electric phase shift between the first phase and the second phase, this electric phase shift having a value of between five and ninety degrees included (5° ≤ ϕ ≤ 90°); **characterised in that** the electric motor comprises a control device (52) comprising a circuit (C1) for detecting intersection times (Tc) at which a first induced voltage signal (U_{B1}), generated by the rotor rotating in one or more coils belonging to the first phase, has a value that is substantially equal to that of a second induced voltage signal (U_{B2}), generated by the rotor rotating in one or more coils belonging to the second phase, the first and second induced voltage signals thus having said electric phase shift therebetween; and **in that** the control device (52) is arranged so as to be able to generate electric driving pulses (58a, 58b) in order to rotate the rotor, which pulses are respectively initiated at initiation times determined by respective intersection times, the control device being arranged such that said electric driving pulses can be applied to a set of coils formed by at least one coil of the first phase and by at least one coil of the second phase, which are arranged in series at least during application of the electric driving pulses.

2. Electric motor according to claim 1, **characterised in that** the electric phase shift ϕ has a value of between ten and ninety degrees included (10° ≤ ϕ ≤ 90°).

3. Electric motor according to claim 1, **characterised in that** the electric phase shift ϕ has a value of between thirty and sixty-five degrees (30° < ϕ < 65°).

4. Electric motor according to any of the preceding claims, **characterised in that** the control device (52) further comprises at least one switch (S6) momentarily allowing the one or more coils generating said first induced voltage signal to be electrically isolated from the one or more coils generating said second induced voltage signal in order to allow said intersection times to be detected by the detection circuit; **in that** the detection circuit comprises a comparator (C1), the two inputs whereof are respectively connected to a first terminal of the one or more coils generating said first induced voltage signal (U_{B1}) and to a first terminal of the one or more coils generating said second induced voltage signal (U_{B2}); and **in that** the control device is arranged such that, during detection phases for detecting said intersection times, the two corresponding second terminals are momentarily connected via two respective switches (S7, S8) to a reference voltage (V_{Ref}).

5. Electric motor according to any of the preceding claims, **characterised in that** the control device (52) is arranged such that said initiation times at which said electric driving pulses (58a, 58b) are initiated occur directly after detections of corresponding intersection times (Tc), whereby no time delay means is provided for the generation of these electric driving pulses subsequent to the detections of the corresponding intersection times.

6. Electric motor according to any of the preceding claims, **characterised in that** the control circuit (52) further comprises a comparator (C2), the two inputs whereof are connected to two terminals of a coil (B2) or of a set of coils belonging to one of the first or second phases, so as to allow the direction of rotation of the rotor to be detected in association with the circuit for detecting intersection times.

7. Electric motor according to any of the preceding claims, **characterised in that** the supply voltage (Vsup) applied, upon application of said electric driving pulses (58a, 58b), through said at least one coil (B1) of the first phase and said at least one coil (B2) of the second phase, which are thus arranged in series, is provided such that it is greater than the maximum value of the sum of the induced voltages thereof and less than one hundred and fifty percent (150%) of this maximum value when the rotor is turning with a nominal angular speed.

8. Electric motor according to any of the preceding claims, **characterised in that** the control circuit (52) further comprises at least one switch (S5) arranged so as to allow at least one coil (B1) of the first phase and at least one coil (B2) of the second phase to be powered separately and selectively, the control circuit being arranged such that it can, during a start-up phase of the electric motor, firstly power one of the first or second phases in order to position the rotor, then the other of these first or second phases in order to cause the rotor to rotate in the desired direction.

9. Electric motor according to any of the preceding claims, **characterised in that** the stator is formed by only two flat coils (B1, B2) which respectively constitute the first and second phases, whereby the permanent magnets of the rotor have an alternating axial polarisation.

10. Watch movement (2) comprising an electric motor (4) according to claim 9, **characterised in that** the two coils (B1, B2) are arranged in a same general plane, perpendicular to the rotational axis (14) of the rotor, so as to occupy an angular sector, relative to the rotational axis of the rotor, of less than 230° to allow a wheel (32) for transmitting the rotational movement of the rotor (8) to be arranged in this general plane, the rotor comprising, for this purpose, a pinion (30) arranged at said general plane and the central axis whereof is aligned with the rotational axis of the rotor.
